# EUROPÄISCHE PATENTANMELDUNG

(11) **EP 2 896 458 A1**
(43) Veröffentlichungstag der Anmeldung: **22.07.2015**
(21) Anmeldenummer: 14152113.8
(22) Anmeldetag: 22.01.2014
(51) Int. Cl.: B01L 3/00, G02B 21/34

(54) **Transparenter 0bjektträger mit Kennzeichnung**

(30) Priorität: 16.01.2014 DE 102014000360
(71) Anmelder: Euroimmun Medizinische Labordiagnostika AG, 23560 Lübeck (DE)
(72) Erfinder: Stöcker, Winfried, 23627 Groß Grönau (DE); Rottmann, Norbert, 23570 Lübeck (DE); Koop, Norbert, 23923 Schattin (DE)

(57) **Zusammenfassung**

Die vorliegende Erfindung betrifft einen transparenten Objektträger, der eine im Inneren eingeprägte Kennzeichnung aufweist, ein diagnostisches Instrument, bevorzugt Mikroskop, in Kombination mit einem zur diagnostischen Analyse eingebrachten transparenten Objektträger, und ein Verfahren umfassend die Schritte Bereitstellen eines transparenten Objektträgers, Einprägen einer Kennzeichnung, die im Inneren des Trägers lokalisiert ist, Versehen des transparenten Objektträgers mit einer biologischen oder chemischen Probe und, optional, Zerteilen des transparenten Objektträger unter Entstehung einer Vielzahl kleinerer transparenter Objektträger umfassend Material aus der biologischen oder chemischen Probe.

## Beschreibung

Die vorliegende Erfindung betrifft einen transparenten Objektträger, der eine im Inneren eingeprägte Kennzeichnung aufweist, ein diagnostisches Instrument, bevorzugt Mikroskop, in Kombination mit einem zur diagnostischen Analyse eingebrachten transparenten Objektträger, und ein Verfahren umfassend die Schritte Bereitstellen eines transparenten Objektträgers, Einprägen einer Kennzeichnung, die im Inneren des Trägers lokalisiert ist, Versehen des transparenten Objektträgers mit einer biologischen oder chemischen Probe und, optional, Zerteilen des transparenten Objektträgers unter Entstehung einer Vielzahl kleinerer transparenter Objektträger umfassend Material aus der biologischen oder chemischen Probe.

Labordiagnostische Untersuchungen stellen eine unverzichtbare Grundlage für die moderne Medizin dar. Mittlerweile steht eine Vielzahl von routinemäßig durchführbaren Tests zur Verfügung, mit Hilfe derer in Abwesenheit des Patienten aus Probenmaterial menschlichen oder tierischen Ursprungs entscheidende Informationen zum vorliegenden Krankheitsbild, zur Prognose oder zum Erfolg einer Behandlung erhalten werden können.

Die Verantwortung dem Patienten gegenüber gebietet es, an die Zuverlässigkeit und Aussagekraft der Ergebnisse solcher Untersuchungen höchste Anforderungen zu stellen. Dazu muss eine stringente Identitätssicherung gewährleistet werden, bei der von der Gewinnung des Probenmaterials am menschlichen oder tierischen Körper bis zur Erstellung der Diagnose ein Verlust oder gar eine Fehlzuordnung von Daten zu einem anderen Patienten als dem Probenspender unter allen Umständen ausgeschlossen werden kann.

Gleichzeitig müssen aufgrund von Wirtschaftlichkeitserwägungen Arbeitsabläufe und Materialverbrauch optimiert werden. Insbesondere geht der Trend in Richtung Miniaturisierung: diagnostische und analytische Reaktionen werden nicht mehr im Maßstab von Millilitern, sondern von Mikro- oder gar Nanolitern ausgeführt. Das spart Reagenzien, Platz und gestattet, dass eine einmal gewonnene Probe, die mehrfach aufgetaut und wieder eingefroren werden kann, genug Ausgangsmaterial für eine große Anzahl von diagnostischen Untersuchungen liefert. Nicht zuletzt bleibt dem Patienten auch für den Fall, dass ein einzelner diagnostischer Test aus technischen Gründen oder aufgrund von Fehlern des mit der Durchführung betrauten Personals misslingt, die erneute Entnahme einer Probe erspart.

Zur Identitätssicherung wird eine Probe in einem Gefäß oder auf einem Objektträger gewöhnlich mit einer Kennzeichnung versehen, die einem Patienten zugeordnet ist. Sofern sich die Probe in handelsüblichen Gefäßen mit wenigstens einigen Millilitern Inhalt, beispielsweise Blutentnahmeröhrchen, befindet, kann diese Kennzeichnung zusammen mit den wichtigsten Patientendaten auf einem Klebefilm ausgedruckt und auf das Gefäß geklebt werden.

Bei einer Prozessierung der Probe im Mikrolitermaßstab gestaltet sich die Identitätssicherung ungleich schwieriger, insbesondere dann, wenn spezielle oder gar individuell angefertigte Medizinprodukte von wenigen Millimetern Größe, insbesondere miniaturisierte Objektträger für Proben wie Biochips, zum Einsatz kommen. Großflächige, aufklebbare Etiketten, handelsübliche Barcodes, Magnetstreifen oder dergleichen, wie sie der Stand der Technik im Zusammenhang mit Biochips lehrt (EP 1 277 055), kommen dann schon aus geometrischen Gründen nicht mehr in Frage.

Übliche im Stand der Technik beschriebene Kennzeichnungen wie Gravuren, Aufdrucke, Etiketten und dergleichen, wie sie beispielsweise in der EP 1 245 395 beschrieben sind, haben weitere Nachteile. Zunächst nehmen sie einen erheblichen Platz auf der Oberfläche des Biochips in Anspruch und verringern so die für die Beschichtung mit einer biologischen oder chemischen Probe zur Verfügung stehende Fläche.

Weiterhin ist die Verlässlichkeit derartiger Kennzeichnungen gering, da sie durch mechanische Beschädigungen der Oberfläche, Abbrechen von Teilen des Objektträgers, im Falle von aufgedruckten Kennzeichnungen durch Abwaschen, bei Kennzeichnungen auf Etiketten durch deren Ablösung vom Objektträger entfernt oder unbrauchbar gemacht werden können. Dieses Problem ist bei labordiagnostisch zu untersuchenden Proben besonders signifikant, da etablierte analytische oder diagnostische Verfahren häufig bei wenigstens einem Schritt die Behandlung der Probe mit aggressiven Chemikalien wie hochreaktiven Säuren, sehr starken Lösungsmitteln, beispielsweise Xylol, oder mit konzentrierten Farbstoffen vorsehen, die Kennzeichnungen verdecken oder verwischen können.

Nicht zuletzt verkomplizieren solche herkömmlichen Kennzeichnungen die Arbeitsläufe, da eine unmittelbare Verifizierung der Identität während der Prozessierung, beispielsweise einer mikroskopischen Untersuchung, nicht unmittelbar möglich ist. Der Objektträger muss vielmehr erst aus dem Mikroskop herausgenommen werden und mit einem anderen, zur Detektion der Kennzeichnung geeigneten Gerät oder mit dem menschlichen Auge abgelesen werden. Dabei kann es wiederum zu Fehlzuordnungen kommen, etwa dann, wenn das im Mikroskop betrachtete Feld versehentlich mit einem anderen Feld verwechselt wird oder Biochips mit Proben von unterschiedlichen Patienten vertauscht werden.

Der vorliegenden Erfindung liegt daher die Aufgabe zu Grunde, einen Objektträger mit einer biologischen oder chemischen Probe bereitzustellen, der so beschaffen ist, dass einer Beeinträchtigung, Zerstörung oder Unkenntlichmachung der Kennzeichnung beim Aufbringen der biologischen oder chemischen Probe oder bei nachfolgenden Schritten, insbesondere beim Prozessieren oder Analysieren der Probe, beispielsweise durch mechanische Beschädigung, durch Verwischen oder Verlaufen von Farbstoffen oder durch Reaktion mit reaktiven Chemikalien, vorgebeugt wird.

Der vorliegenden Erfindung liegt weiterhin die Aufgabe zu Grunde, einen Objektträger mit einer biologischen oder chemischen Probe bereitzustellen, der eine im Inneren eingeprägte Kennzeichnung aufweist, wobei die biologische oder chemische Probe und die Kennzeichnung während einer analytischen oder diagnostischen Untersuchung, bevorzugt während eines Mikroskopierschritts, ohne Veränderung der bevorzugt horizontalen Position des Objektträgers oder des Sichtfeldes mit der Probe und/oder ohne ein zusätzliches zur Detektion der Kennzeichnung geeignetes Gerät mit dem Mikroskop betrachtet werden können.

Der vorliegenden Erfindung liegt weiterhin die Aufgabe zu Grunde, einen Objektträger mit Kennzeichnung bereitzustellen, der derart beschaffen ist, dass das Verhältnis der von der Probe in Anspruch genommenen Fläche zur Gesamtfläche des Objektträgers optimiert ist und bevorzugt die Menge der für die durchzuführende Untersuchung oder Reaktion benötigten Reagenzien und Substrate minimiert ist.

Diese und weitere Aufgaben werden durch den Gegenstand der vorliegenden Anmeldung und insbesondere auch durch den Gegenstand der beigefügten unabhängigen Ansprüche gelöst, wobei sich Ausführungsformen aus den Unteransprüchen ergeben.

In einem ersten Aspekt wird die der vorliegenden Erfindung zu Grunde liegende Aufgabe gelöst durch einen transparenten Objektträger, der eine im Inneren, bevorzugt unter der intakten Oberfläche des Objektträgers eingeprägte Kennzeichnung aufweist.

In einer ersten Ausführungsform des ersten Aspekts enthält der Objektträger eine biologische oder chemische Probe.

In einer zweiten Ausführungsform, bei der es sich um eine Ausführungsform der ersten Ausführungsform handelt, ist die biologische oder chemische Probe prozessiert, wobei es sich bevorzugt um eine biologische Probe handelt, die diagnostisch oder analytisch prozessiert ist.

In einer dritten Ausführungsform, bei der es sich um eine Ausführungsform der ersten bis zweiten Ausführungsform handelt, wird die Aufgabe gelöst durch eine Halterung umfassend wenigstens zwei transparente Objektträger mit jeweils einer biologischen oder chemischen Probe, wobei bevorzugt die biologischen oder chemischen Proben auf wenigstens zwei der transparenten Objektträger nach unterschiedlichen Verfahren diagnostisch oder analytisch prozessiert sind.

In einem zweiten Aspekt wird die Aufgabe gelöst durch ein diagnostisches Instrument, bevorzugt ein Mikroskop, umfassend den erfindungsgemäßen transparenten Objektträger oder umfassend die erfindungsgemäße Halterung umfassend zwei oder mehr transparente Objektträger.

In einem dritten Aspekt wird die Aufgabe gelöst durch ein Verfahren umfassend die Schritte
a) Bereitstellen eines transparenten Objektträgers,
b) Einprägen einer Kennzeichnung, die im Inneren des Objektträgers lokalisiert ist,
c) Versehen des transparenten Objektträgers mit einer biologischen oder chemischen Probe und
d) optional: Zerteilen des transparenten Objektträgers nach Schritt b), wobei wenigstens zwei transparente Objektträger-Fragmente entstehen, die Material aus der biologischen oder chemischen Probe umfassen.

In einer ersten Ausführungsform des dritten Aspekts ist der transparente Objektträger mit einer Vielzahl von Kennzeichnungen versehen, die über die Fläche des Objektträgers regelmäßig und in einer Dichte derart angeordnet sind, dass die in Schritt c) entstehenden Objektträger-Fragmente jeweils wenigstens eine Kennzeichnung aufweisen.

In einer zweiten Ausführungsform des dritten Aspekts, bei der es sich auch um eine Ausführungsform der ersten Ausführungsform handelt, wird die Aufgabe gelöst durch ein Verfahren, weiter umfassend den Schritt
e) Prozessieren der Probe auf wenigstens einem Objektträger, wobei es sich bei der Probe bevorzugt um eine biologische Probe handelt, die diagnostisch oder analytisch prozessiert wird.

In einer bevorzugten Ausführungsform des erfindungsgemäßen Objektträgers oder Verfahrens sind die Kennzeichnung und die biologische oder chemische Probe übereinander in einem Sichtfeld angeordnet.

In einer bevorzugten Ausführungsform des erfindungsgemäßen Objektträgers oder Verfahrens ist die Kennzeichnung durch maschinelle Laserbearbeitung eingeprägt.

In einer bevorzugten Ausführungsform des erfindungsgemäßen Objektträgers oder Verfahrens ist die biologische oder chemische Probe aus der Gruppe ausgewählt, die Zellen, Gewebeschnitte und biochemisch charakterisierte Substanzen umfasst.

In einer bevorzugten Ausführungsform des erfindungsgemäßen Objektträgers oder Verfahrens besteht der transparente Objektträger aus Glas, einem mineralischen Stoff oder Kunststoff, bevorzugt aus Glas.

In einer bevorzugten Ausführungsform des erfindungsgemäßen Objektträgers oder Verfahrens handelt es sich bei der Kennzeichnung um einen Barcode oder Dotcode, bevorzugt einen Dotcode.

In einer bevorzugten Ausführungsform des erfindungsgemäßen Objektträgers oder Verfahrens sind die biologische oder chemische Probe und die Kennzeichnung derart in einem Sichtfenster angeordnet, dass ohne Änderung der Position des Objektträgers unter einem Mikroskop wahlweise auf die Kennzeichnung oder die biologische oder chemische Probe fokussiert werden kann.

In einer bevorzugten Ausführungsform des erfindungsgemäßen Objektträgers oder Verfahrens besteht der transparente Objektträger aus einem homogenen Material.

In einer bevorzugten Ausführungsform des erfindungsgemäßen transparenten Objektträgers oder Verfahrens enthält die Kennzeichnung mikroskopisch kleine, visuell lesbare Ziffern.

In einer bevorzugten Ausführungsform des erfindungsgemäßen Verfahrens umfasst das Verfahren Schritt d) und enthält jedes der Objektträger-Fragment nach Schritt d) wenigstens eine Kennzeichnung, die es erlaubt, das jeweilige Objektträger-Fragment dem transparenten Objektträger in Schritt a) zuzuordnen bevorzugt über einen Code als Teil der Kennzeichnung, der dem transparenten Objektträger in Schritt a) spezifisch zugeordnet werden kann.

In einer bevorzugten Ausführungsform umfasst das erfindungsgemäße Verfahren Schritt d) und die Kennzeichnungen sämtlicher Objektträger-Fragmente umfassen als Teil der Kennzeichnung einen identischen Code.

Die vorliegende Erfindung betrifft einen transparenten Objektträger mit einer biologischen oder chemischen Probe. Die Probe kann eine beliebige Beschaffenheit aufweisen. Beispielsweise kann es sich dabei um einen zu untersuchenden Gewebeschnitt handeln, der auf den transparenten Objektträger aufgebracht wird und anschließend mit einem Reagenz in Form von fluoreszenzmarkierten Antikörpern gegen ein Antigen auf dem Gewebeschnitt in einer wässrigen Lösung untersucht wird. Genau so kann es sich um eine flüssige Probe wie eine Blutprobe handeln, die mit einem immobilisierten, in Form einer Beschichtung auf dem Objektträger aufgetragenen Reagenz untersucht wird.

Der Objektträger ist so beschaffen, dass er zur Aufnahme einer Probe, besonders einer chemischen oder biologischen Probe, geeignet ist, beispielsweise durch Beschichtung, und weist eine entsprechende Form, beispielsweise mit Vertiefungen, und/oder chemisch-physikalische Eigenschaften auf, beispielsweise eine adsorptionsfähige Oberfläche oder reaktionsfähige chemische Gruppen. Weiterhin ist er so beschaffen, dass er in Fragmente zerteilt werden kann. In einer bevorzugten Ausführungsform ist die Probe auf der Oberfläche des Objektträgers in Form einer Beschichtung angebracht oder mit dieser chemisch durch kovalente oder nichtkovalente Bindungen verbunden. Geeignete Objektträger sind im Stand der Technik beschrieben, beispielsweise in der DE 20 2011 005 278.

Beispielsweise kann es sich um einen Objektträger handeln, der ausschließlich oder überwiegend, wenigstens an den Stellen, an denen Transparenz zur Wahrnehmung der Probe und der Kennzeichnung erforderlich ist, aus Glas, durchsichtigem Kunststoff o. ä. handelt. In einer besonders bevorzugten Ausführungsform handelt es sich um einen handelsüblichen Objektträger aus transparentem Glas, wie er beispielsweise in der DE 20 2011 005 278 beschrieben ist. Mögliche Materialien umfassen Glas, transparente mineralische Stoffe und transparente Kunststoffe. Es sind auch Mischungen verschiedener miteinander verträglicher transparenter Stoffe möglich. Die Dicke des transparenten Objektträgers beträgt bevorzugt 0,05 bis 20 mm, bevorzugter 0,1 bis 1,5 mm, noch bevorzugter 0,1 bis 0,3 mm. Der transparente Objektträger weist typischerweise Ausmaße auf, die eine Analyse im Hochdurchsatzmaßstab bei laborüblichem Raumangebot erlauben. Bevorzugt beträgt die Fläche des Objektträgers 1 mm² bis 100 cm², am bevorzugtesten 4 cm² bis 20 cm². In einer bevorzugten Ausführungsform handelt es sich bei dem Objektträger um ein handelsübliches Deckglas aus Borosilikatglas der Maße 76 mm x 26 mm x 0,15 mm.

Hinsichtlich seiner optischen Eigenschaften erlaubt der transparente Objektträger, dass bei mikroskopischer Betrachtung der biologischen oder chemischen Probe unmittelbar oder durch eine geringfügige Verstellung des Fokus die Kennzeichnung wahrgenommen werden kann. In einer bevorzugten Ausführungsform lässt sich die Kennzeichnung mit bloßem Auge ablesen. In einer bevorzugten Ausführungsform bedeutet der Begriff "transparent", wie hierin verwendet, dass das Material des Objektträgers, obwohl es die Kennzeichnung einschließt, eine visuelle oder gerätegestützte Detektion der Kennzeichnung gestattet, wobei die Art der gerätegestützten Detektion von der Natur der Kennzeichnung abhängt. Bevorzugt erlaubt die Transparenz eine lichtmikroskopische oder fluoreszenzmikroskopische Analyse der Probe auf dem Objektträger samt Kennzeichnung.

In einer bevorzugten Ausführungsform ist der Objektträger durchgehend transparent, in einer bevorzugteren Ausführungsform ist er wenigstens an denjenigen Stellen, an denen er auf seiner Oberfläche die biologische oder chemische Probe aufweist, transparent, so dass die im Innern eingearbeitete Kennzeichnung detektiert werden kann. In einer weiteren bevorzugteren Ausführungsform ist der Objektträger an den Stellen, an denen er die Probe aufweist, intransparent, aber an der Stelle der Kennzeichnung transparent. Es besteht auch die Möglichkeit, dass der Objektträger an Stellen, an denen er auf seiner Oberfläche keine Probe aufweist, intransparent ist, um die Aufmerksamkeit des Betrachters auf die Probe und die Kennzeichnung zu lenken und/oder den Kontrast zu erhöhen. Der Objektträger kann an derartigen Stellen aus einem intransparenten Material besteht, oder durch Bekleben mit einer Folie oder Bestreichen mit einer Farbe, bevorzugt mit dunklem Farbton, am bevorzugtesten schwarz, intransparent gestaltet sein. Die Probe ist selbst durchsichtig oder dünn genug, dass sie die Detektierbarkeit und Lesbarkeit der Kennzeichnung bei entsprechender Änderung der Fokussierung nicht nennenswert beeinträchtigt.

Der transparente Objektträger kann eine oder mehr als eine Probe aufweisen, wobei die Proben im letzteren Fall aus unterschiedlichem Material und/oder aus unterschiedlichen Quellen stammen können. In einer bevorzugten Ausführungsform handelt es sich bei der Probe um einen Gewebeschnitt, besonders bevorzugt aus einem menschlichen oder tierischen Patienten, der auf den Objektträger aufgebracht wird, woraufhin der Objektträger in einer besonders bevorzugten Ausführungsform zerschnitten wird, so dass zahlreiche kleinere Objektträger-Fragmente gewonnen werden, die Probenmaterial aus dem gleichen Patienten aufweisen. Im Falle von mehr als einer Probe können die Proben getrennt oder kolokalisiert auf dem Objektträger vorliegen.

In einer bevorzugten Ausführungsform wird unter dem Begriff "Probe", wie hierin verwendet, eine auf ihre Eigenschaften zu untersuchende biologische Probe oder ein auf seine Eigenschaften zu untersuchender chemischer Stoff oder ein Stoffgemisch verstanden.

Beispielsweise kann die biologische Probe aus der Gruppe umfassend Gewebe, bevorzugt Gewebeschnitte oder Gewebebiopsien, z. B. Kryoschnitte oder Paraffinschnitte, biologische Zellen wie eukaryontische oder prokaryontische Zellen oder Produkte daraus, Viren, aufgereinigte, isolierte oder künstlich hergestellte Moleküle wie Nukleinsäuren, Polypeptide, Lipide oder Kohlenhydrate ausgewählt sein. Bevorzugt ist die biologische Probe menschlichen oder tierischen Ursprungs.

Beispielsweise kann die chemische Probe aus der Gruppe umfassend small molecules, biologische Makromoleküle wie Nukleinsäuren, Polypeptide, Lipide oder Kohlenhydrate, Naturstoffe, künstliche Polymere und anorganische Stoffe ausgewählt sein. Bevorzugt handelt es sich bei der chemischen Probe um eine Nukleinsäure, die besonders bevorzugt immobilisiert ist.

Bevorzugt ist der erfindungsgemäße transparente Objektträger für ein diagnostisches Verfahren vorgesehen, er eignet sich aber auch für eine Vielzahl von nichtdiagnostischen Anwendungen. Beispielsweise können transparente Objektträger mit Substanzbibliotheken beschichtet werden, die im Hochdurchsatzverfahren auf ihre biologische oder pharmakologische Aktivität oder auf bestimmte physikalische Eigenschaften, beispielsweise Materialeigenschaften wie Bruchzähigkeit, zu untersuchen oder zu screenen sind. Chemische Reaktanden können in Vertiefungen auf der Oberfläche des Objektträgers auf ihre Reaktionsfähigkeit untersucht werden, wobei beispielsweise das Produkt oder Zwischenprodukte mikroskopisch analysiert werden oder die Reaktion mit geeigneten Instrumenten verfolgt wird.

Der erfindungsgemäße transparente Objektträger ist bevorzugt von der Grundfläche planar, kann aber spezifische Felder oder Vertiefungen aufweisen, beispielsweise solche, die durch Erhöhungen oder Vertiefungen eine räumliche begrenzte Bedeckung mit einer Flüssigkeit zulassen, ohne dass sich diese unkontrolliert verteilten könnte. Derartige Vertiefungen können Kleinreaktoren ausbilden, in denen unabhängig voneinander auf dem Objektträger in einem geeigneten Lösungsmittel chemische Reaktionen und biologische Wechselwirkungen ablaufen können, z. B. die Bindung eines Antikörpers an ein Antigen. Im Stand der Technik sind zahlreiche Formate beschrieben, beispielsweise Mikrotiterplatten, Inkubationsgefäße mit Rinnen (US20100124750), Erhebungen (DE 10 2013 017 802) und dergleichen.

Der erfindungsgemäße Objektträger kann zusätzlich Beschichtungen enthalten, um die Anlagerung von Flüssigkeiten in spezifischen Bereichen zu steuern. Beispielsweise können hydrophobe Flächen nicht benetzt werden, wohingegen hydrophile Flächen gut benetzbar sind.

Erfindungsgemäß ist vorgesehen, dass eine biologische oder chemische Probe prozessiert sein kann. In einer bevorzugten Ausführungsform wird unter dem Begriff "prozessiert", wie hierin verwendet, verstanden, dass die Probe nicht mehr in dem Zustand vorliegt, in dem sie gewonnen und/oder auf den transparenten Objektträger aufgebracht wurde, bevorzugt aus dem menschlichen oder tierischen Patienten gewonnen wurde, sondern in einem verarbeiteten Zustand. Typischerweise umfasst das Prozessieren eine physikalische Behandlung der Probe, beispielsweise durch Erhitzen, Färben, Trocknen oder dergleichen, oder eine chemische Behandlung, beispielsweise das Immobilisieren durch chemische Bindungen, das Reduzieren der Probe, die Zugabe von Enzyminhibitoren oder dergleichen. Das Prozessieren oder die Vorbereitung kann auch eine Konservierung, beispielsweise den Schutz der Probe vor Austrocknung umfassen, beispielsweise durch Eindecken mit einer Glycerinlösung oder mit in organischem Lösungsmittel gelösten harzartigen Substanzen.

In einer besonders bevorzugten Ausführungsform ist die Probe diagnostisch oder analytisch prozessiert. In einer bevorzugten Ausführungsform wird unter dem Begriff "diagnostisch oder analytisch prozessiert", wie hierin verwendet, verstanden, dass die Probe derart mit diagnostischen Verfahren und/oder Agenzien behandelt wurde, dass ihr Zustand, optional nach weiteren Prozessierungsschritten eine Analyse und einen Beitrag zu einer Diagnose gestattet. Es kommen beispielsweise labormedizinische, zytologische, morphologisch-mikroskopische, biochemische, (immun)chemische, besonders immunhistochemische oder enzymhistochemische, molekularbiologische, histologische, serologische, pathologische, chemische oder physikalische Analyseverfahren in Frage. In einer besonders bevorzugten Ausführungsform ist die Probe eine biologische Probe, die in Formalinlösung fixiert und/oder paraffiniert ist. In einer besonders bevorzugten Ausführungsform wird ein Gewebeschnitt mit Farbstoffen oder markierten Antikörpern, bevorzugt fluoreszenzmarkierten Antikörpern, angefärbt und mit Hinblick auf die Morphologie der darin enthaltenen Zellen mikroskopisch untersucht. Beispielhafte molekularbiologische Verfahren umfassen in *situ*-Hybridisierungen wie die Fluoreszenz-*in situ-*Hybridisierung. Beispielhafte pathologische Verfahren umfassen Färbungen wie die ATPase-, NADH-, Hämatoxylin-Eosin-, Gomori-Trichrom-, PAS-, und Ölrot-Färbung an Muskelbiopsien. Geeignete Reagenzien, Software und Geräte zum Prozessieren von Proben sind im Handel erhältlich, beispielsweise von der Firma EUROIMMUN AG Medizinische Labordiagnostika, Lübeck.

Mit Hinblick auf die Kennzeichnung ist es erfindungsgemäß essentiell, dass sich diese im Inneren des transparenten Objektträgers befindet. Dies ist bevorzugt dann der Fall, wenn kein Teil der Kennzeichnung gegenüber einer Flüssigkeit exponiert ist, in die der Objektträger im intakten Zustand eingetaucht wird. In einer bevorzugten Ausführungsform fallen unter den Begriff "Einprägen" sämtliche Verfahren, die zur Herstellung eines Objektträgers mit einer Kennzeichnung im Inneren führen. Bevorzugt ist der Begriff "Einprägen" dabei breit in dem Sinne zu verstehen, dass er das Einarbeiten der Kennzeichnung mittels sämtlicher zur Verfügung stehender geeigneter Techniken umfasst und die Begriffe "Einprägen" und "Einarbeiten" besonders bevorzugt gleichbedeutend sind.

In einer bevorzugten Ausführungsform ist die Kennzeichnung in den transparenten Objektträger durch maschinelle Laserbearbeitung eingeprägt. Der Begriff "maschinelle Laserbearbeitung" umfasst sämtliche Verfahren, die dem Fachmann für das Einprägen einer Kennzeichnung in einen transparenten Objektträger unter Verwendung eines Lasers zur Verfügung stehen. Geeignete Verfahren zur Laserbearbeitung von transparenten Körpern sind in der WO 2008/151616 beschrieben. Kurz gesagt wird dies durch Applizieren von Laserpulsen mit einem geeigneten Strahlprofil, einer geeigneten Laserwellenlänge, bevorzugt aus dem Intervall von 300 bis 1000 nm, Pulslänge, bevorzugt aus dem Intervall von 250 bis 1000, noch bevorzugter 300 bis 1000 nm, Pulslänge, bevorzugt aus dem Intervall von 10 fs bis 20 ns, noch bevorzugter 300 ps bis 20 ns, und Bestrahlungsstärke bewerkstelligt.

Alternativ kann die Kennzeichnung dadurch ins Innere des Objektträgers eingebracht werden, dass sie, beispielsweise in Form eines festen, bedruckten Plastikstreifens oder dergleichen geringer Größe, in eine härtbare Mischung aus reaktionsfähigen Monomeren eingebracht wird, die anschließend unter Einschluss der Kennzeichnung zu einem transparenten Polymer, beispielsweise aus Polymethylmethacrylat, als Objektträger aushärtet. Schließlich kann die Kennzeichnung auch dadurch eingeprägt werden, dass der Objektträger aus verschiedenen, aufeinander aufgeklebten Schichten besteht, von denen eine oder mehr als eine der inneren Schichten die Kennzeichnung auf einer Oberfläche aufweisen. Es ist jedoch besonders bevorzugt, dass die Kennzeichnung durch maschinelle Laserbearbeitung im Inneren eines in homogener Form vorliegenden transparenten Objektträgers eingeprägt wird.

Besonders bevorzugt befindet sich die Kennzeichnung im Inneren eines ansonsten homogenen transparenten Objektträgers. In einer bevorzugten Ausführungsform wird unter dem Begriff "homogen", wie hierin verwendet, verstanden, dass der erfindungsgemäße transparente Objektträger, abgesehen von der Kennzeichnung durchgehend aus einem Block des Materials ohne innere Grenzflächen besteht und nicht etwa aus verschiedenen zusammengeklebten Schichten oder Stücken des Materials oder verschiedener Materialien.

Für die Kennzeichnung kommt jede Kennzeichnung in Frage, die im Inneren des transparenten Objektträgers lokalisiert ist, aber von außen detektierbar und auslesbar ist. In einer bevorzugten Ausführungsform handelt es sich um eine optisch detektierbare und auslesbare Kennzeichnung, noch bevorzugter um eine maschinenlesbare Kennzeichnung, am bevorzugtesten um einen Barcode, beispielsweise einen ein-, zwei- oder dreidimensionalen Barcode oder Dotcode, insbesondere um einen Dotcode. Alternativ kann eine Folge von Buchstaben und/oder Ziffern verwendet werden. Auch andere Arten der Kennzeichnung und Detektion sind denkbar. Beispielsweise kann die Kennzeichnung über ihre Absorption, z.B. im UV/vis-Bereich, über Fluoreszenz oder Radioaktivität detektierbar sein. Die Kennzeichnung kann auch in Form von Mustern, Formen oder kleinen, in den Objektträger eingearbeiteten Körpern oder Hohlräumen mit kennzeichnender Form, Anzahl, Dichte, Farbe und/oder Anordnung geschaffen werden.

Es ist besonders bevorzugt, dass der transparente Objektträger, besonders in Schritt a), eine Vielzahl von logisch angeordneten Kennzeichnungen aufweist, beispielsweise in numerisch und/oder alphabetisch aufeinander abfolgenden Form, so dass anhand der Kennzeichnungen zugeordnet werden kann, an welcher Stelle des transparenten Objektträgers sich jedes der Objektträger-Fragmente aus Schritt d) vor dem Zerteilen befand. Die Kennzeichnung kann neben der Lage des Objektträger-Fragments auf dem Objektträger auch weitere Informationen enthalten, beispielsweise zur Art der Probe oder, besonders bevorzugt, zur Identität des Patienten, von dem die Probe erhalten wurde.

Bei dem erfindungsgemäßen diagnostischen Instrument kann es sich um jedes Instrument oder jede Kombination von Instrumenten handeln, das oder die zur Untersuchung der Probe und/oder der Kennzeichnung geeignet ist oder sind. Dies umfasst beispielsweise sämtliche Varianten der Mikroskopie, insbesondere Licht- und Fluoreszenzmikroskopie, weiterhin Vorrichtungen zur spektroskopischen Untersuchung der Proben, beispielsweise UV/vis-Spektrometer oder Fluoreszenzspektroskop, Szintillationszähler, Kameras und Kombinationen davon. Bevorzugt handelt es sich um ein Mikroskop. Dieses ist so ausgestattet, dass die Position des Objektträgers durch eine Relativbewegung der Oberfläche mit der Probe in Bezug zur Frontlinse des Mikroskops durch Heben und Senken des Kreuztisches oder Objektivs des Mikroskops erfolgt.

Bei der Durchführung des erfindungsgemäßen Verfahrens, das bevorzugt auf die Herstellung wenigstens eines Objektträgers mit wenigstens einer Probe und einer im Inneren eingeprägten Kennzeichnung abzielt, wird in einem Schritt a) ein transparenter Objektträger bereitgestellt. In einem Schritt b) wird eine Kennzeichnung im Inneren des transparenten Objektträgers eingeprägt. Weiterhin wird der Objektträger in einem Schritt c) mit einer biologischen oder chemischen Probe versehen. Dabei kommt es auf die Reihenfolge der Schritte b) und c) nicht an. Es besteht auch die Möglichkeit, zunächst den Objektträger mit der Probe zu versehen und anschließend die Kennzeichnung einzuprägen. Auch ein zumindest teilweises Prozessieren des Objektträgers in Schritt e) ist möglich, bevor die Kennzeichnung angebracht wird. Die verschiedenen Verfahrensschritte können auch gleichzeitig oder zumindest überlappend durchgeführt werden. Das Prozessieren umfasst typischerweise das Behandeln mit chemischen oder diagnostischen Reagenzien. Geeignete Reagenzien umfassen beispielsweise Antikörper, Farbstoffe, Oxidations- oder Reduktionsmittel, Konservierungsmittel, Proteaseinhibitoren, Antibiotika und dergleichen. Vor oder nach diesem Behandeln oder zwischen mehreren Behandlungsschritten kann er erforderlich sein, den Objektträger zu waschen und/oder zu trocknen. Um die Zuordnung zu einem Patienten zu erlauben, folgt, wenn der Chip für ein diagnostisches Verfahren verwendet wird, als weiterer Schritt das Auslesen der Kennzeichnung, bevorzugt vor der Analyse der Probe. Je nach Natur der Kennzeichnung muss ein dafür geeignetes Verfahren verwandt werden, optional unter Verwendung eines geeigneten zusätzlichen Instruments. Im einfachsten Fall erfolgt das Auslesen rein visuell, optional unter Zuhilfenahme eines Mikroskops, bevorzugt Lichtmikroskops. Für den Fall einer durch maschinelle Laserbearbeitung eingefügten Kennzeichnung können auch andere Techniken wie optische Kohärenztomographie zum Einsatz kommen. Dem Schritt e) kann die Analyse der Probe nachfolgen, die im Falle einer mikroskopischen Analyse das Fokussieren auf Probe und/oder Kennzeichnung umfasst, optional gefolgt von der Befunderhebung durch fachkundiges Personal.

Im Folgenden wird die Erfindung unter Bezugnahme auf die Figuren anhand von Ausführungsbeispielen erläutert. Die beschriebenen Ausführungsformen sind in jeder Hinsicht lediglich beispielhaft und nicht als einschränkend zu verstehen, und verschiedene Kombinationen der angeführten Merkmale sind vom Umfang der Erfindung umfasst.

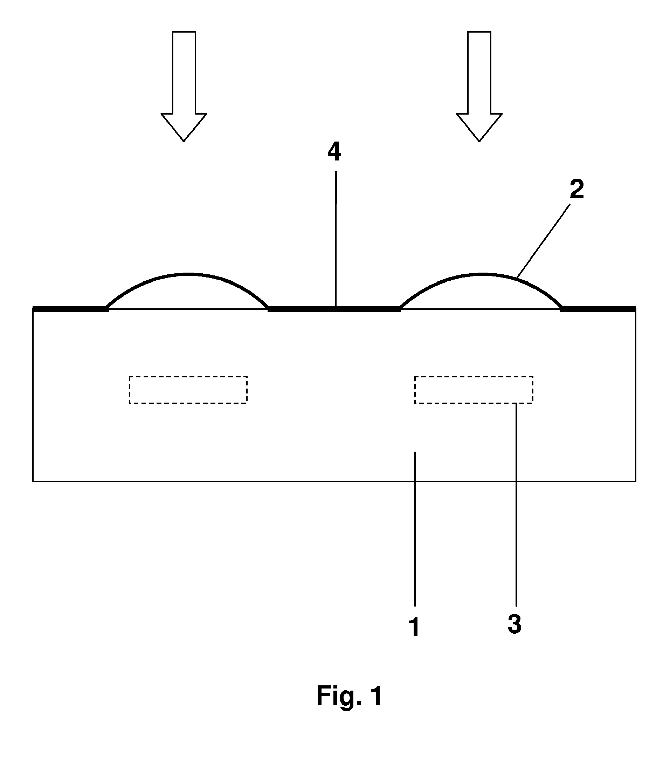

**Fig. 1** zeigt einen erfindungsgemäßen transparenten Objektträger (1) mit einer biologischen oder chemischen Probe (2), einer Kennzeichnung im Inneren (3) und - optional - einer hydrophoben Beschichtung (4) an Teilen der Oberfläche des transparenten Objektträgers, die nicht von der biologischen oder chemischen Probe bedeckt sind. Die Blockpfeile zeigen die Blickrichtung eines Betrachters bei der Analyse der Probe auf dem Objektträger.

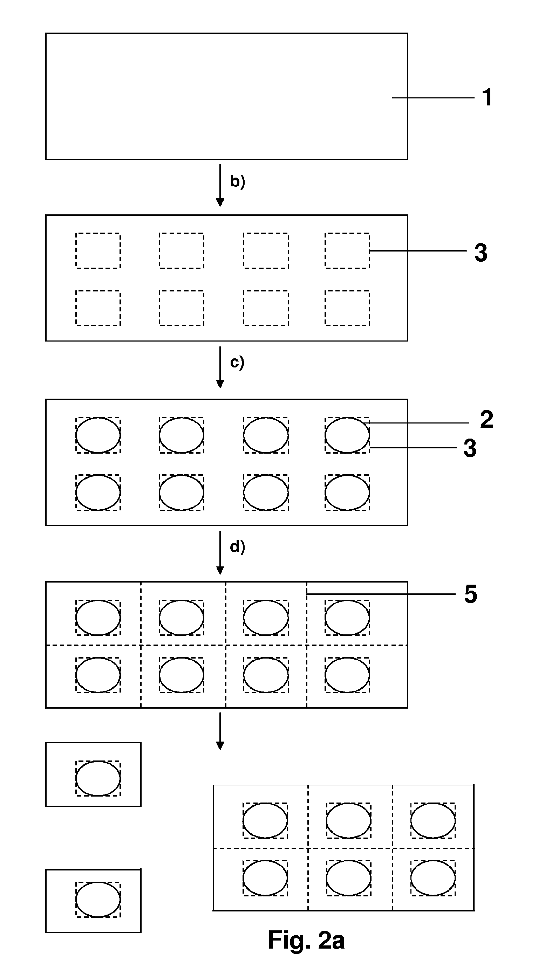

**Fig. 2a** zeigt ein beispielhaftes erfindungsgemäßes Verfahren, bei dem in einem Schritt a) ein transparenter Objektträger (1) mit einer Kennzeichnung im Inneren (3) bereitgestellt wird, dann in einem Schritt b) eine Kennzeichnung im Inneren des transparenten Objektträgers eine Kennzeichnung eingeprägt wird, anschließend in einem Schritt c) mit einer Vielzahl von biologischen oder chemischen Proben versehen wird (2) und schließlich in einem Schritt d) unter Entstehung einer Schnittlinie (5) zerschnitten wird, wobei zwei oder mehr als zwei kleinere transparente Objektträger entstehen, die jeweils Material aus der chemischen oder biologischen Probe (2) umfassen.

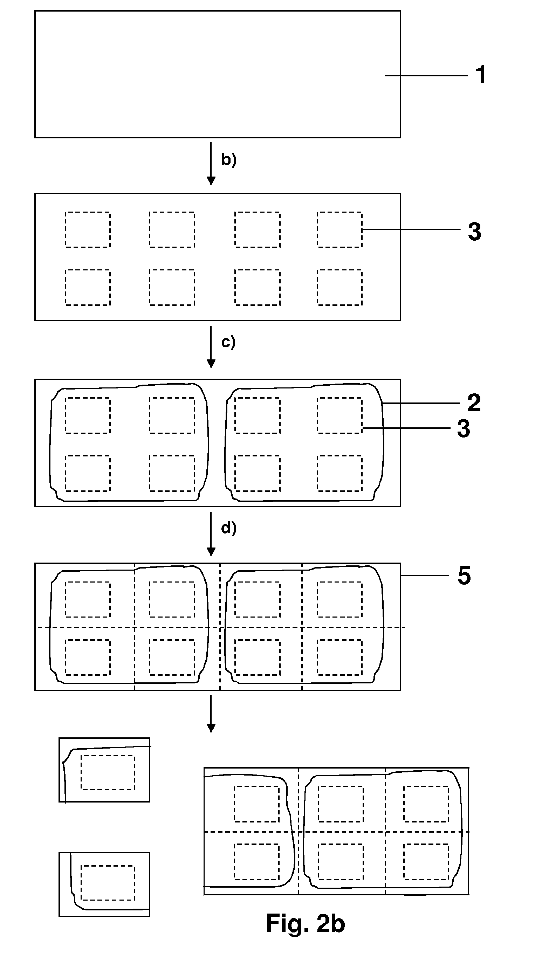

**Fig. 2b** zeigt eine Abwandlung des in **Fig. 2a** dargestellten beispielhaften erfindungsgemäßen Verfahrens. Dabei wird in Schritt c) nicht eine Vielzahl von Proben aufgetragen, sondern nur eine einzelne Probe, beispielsweise ein Gewebeschnitt, der eine Fläche mit mehreren Kennzeichnungen abdeckt. Im Ergebnis bringt das Verfahren kleinere transparente Objektträger hervor, die alle einen Teil der gleichen chemischen oder biologischen Probe aufweisen.

## Patentansprüche

1. Transparenter Objektträger, der eine im Inneren eingeprägte Kennzeichnung aufweist.

2. Transparenter Objektträger nach Anspruch 1, wobei der Objektträger eine biologische oder chemische Probe enthält.

3. Transparenter Objektträger nach einem der Ansprüche 1 oder 2,
wobei die biologische oder chemische Probe prozessiert ist,
und wobei es sich *bevorzugt* um eine biologische Probe handelt, die diagnostisch oder analytisch prozessiert ist.

4. Halterung umfassend wenigstens zwei transparente Objektträger nach einem der Ansprüche 2 bis 3,
wobei *bevorzugt* die Proben auf wenigstens zwei der transparenten Objektträger nach unterschiedlichen Verfahren diagnostisch oder analytisch prozessiert sind.

5. Diagnostisches Instrument, bevorzugt Mikroskop, umfassend den in das Instrument eingebrachten transparenten Objektträger nach einem der Ansprüche 1 bis 3 oder umfassend die Halterung nach Anspruch 4.

6. Verfahren umfassend die Schritte
a) Bereitstellen eines transparenten Objektträgers,
b) Einprägen einer Kennzeichnung, die im Inneren des Objektträgers lokalisiert ist,
c) Versehen des transparenten Objektträgers mit einer biologischen oder chemischen Probe und
d) optional: Zerteilen des transparenten Objektträgers nach Schritt c) unter Entstehung von wenigstens zwei Objektträger-Fragmente, die jeweils Material aus der biologischen oder chemischen Probe umfassen.

7. Verfahren nach Anspruch 6, wobei der transparente Objektträger mit einer Vielzahl von Kennzeichnungen versehen ist, die über die Fläche des Objektträgers regelmäßig und in einer Dichte derart angeordnet sind, dass die in Schritt d) entstehenden kleineren transparenten Objektträger jeweils wenigstens eine Kennzeichnung aufweisen.

8. Verfahren nach Anspruch 6, weiter umfassend den Schritt
e) Prozessieren der Probe auf wenigstens einem transparenten Objektträger, wobei es sich bei der Probe bevorzugt um eine biologische Probe handelt, die diagnostisch oder analytisch prozessiert wird.

9. Transparenter Objektträger oder Verfahren nach einem der Ansprüche 1 bis 8, wobei die Kennzeichnung und die biologische oder chemische Probe übereinander in einem Sichtfeld angeordnet sind.

10. Transparenter Objektträger oder Verfahren nach einem der Ansprüche 1 bis 9, wobei die Kennzeichnung durch maschinelle Laserbearbeitung eingeprägt ist.

11. Transparenter Objektträger oder Verfahren nach einem der Ansprüche 1 bis 10, wobei die biologische Probe aus der Gruppe ausgewählt ist, die Zellen, Gewebeschnitte und biochemisch charakterisierte Substanzen umfasst.

12. Transparenter Objektträger oder Verfahren nach einem der Ansprüche 1 bis 11, wobei der transparente Objektträger aus Glas, einem mineralischen Stoff oder Kunststoff besteht, bevorzugt aus Glas.

13. Transparenter Objektträger oder Verfahren nach einem der Ansprüche 1 bis 12, wobei es sich bei der Kennzeichnung um einen Barcode oder Dotcode, bevorzugt einen Dotcode handelt.

14. Transparenter Objektträger oder Verfahren nach einem der Ansprüche 1 bis 13,
wobei die biologische oder chemische Probe und die Kennzeichnung derart in einem Sichtfenster angeordnet sind, dass ohne Änderung der Position des Objektträgers unter einem Mikroskop wahlweise auf die Kennzeichnung oder die biologische oder chemische Probe fokussiert werden kann.

15. Transparenter Objektträger oder Verfahren nach einem der Ansprüche 1 bis 14, wobei der transparente Objektträger aus einem homogenen Material besteht.

16. Transparenter Objektträger oder Verfahren nach einem der Ansprüche 1 bis 15, wobei die Kennzeichnung mikroskopisch kleine, visuell lesbare Ziffern enthält.

17. Verfahren nach einem der Ansprüche 6 bis 16,
wobei das Verfahren Schritt d) umfasst,
und wobei jedes der Objektträger-Fragmente nach Schritt d) wenigstens eine Kennzeichnung enthält, die es erlaubt, das jeweilige Objektträger-Fragment dem transparenten Objektträger in Schritt a) zuzuordnen,
bevorzugt über einen Code als Teil der Kennzeichnung, der dem transparenten Objektträger in Schritt a) spezifisch zugeordnet werden kann.

18. Verfahren nach Anspruch 6 bis 17, wobei das Verfahren Schritt d) umfasst und die Kennzeichnungen sämtlicher Objektträger-Fragmente als Teil der Kennzeichnung einen identischen Code umfassen.

## Geänderte Patentansprüche

### Geänderte Patentansprüche gemäss Regel 137(2) EPÜ.

1. Transparenter Objektträger mit einer im Inneren eingeprägten Kennzeichnung und einer biologischen oder chemischen Probe, wobei die Kennzeichnung und die Probe übereinander angeordnet sind und wobei der Objektträger zur lichtmikroskopischen oder fluoreszenz-mikroskopischen Analyse der Probe samt Kennzeichnung geeignet ist.

2. Objektträger nach Anspruch 1, wobei die biologische oder chemische Probe und die Kennzeichnung derart angeordnet sind, dass ohne Änderung der Position des Objektträgers unter einem Mikroskop wahlweise auf die Kennzeichnung oder die biologische oder chemische Probe fokussiert werden kann.

3. Objektträger nach einem der Ansprüche 1 bis 2, wobei es sich um eine diagnostisch prozessierte Probe handelt.

4. Objektträger nach einem der Ansprüche 1 bis 3, wobei die Kennzeichnung durch maschinelle Laserbearbeitung eingeprägt ist.

5. Objektträger nach einem der Ansprüche 1 bis 4, wobei es sich bei der Kennzeichnung um eine Kennzeichnung zur Identitätssicherung handelt.

6. Halterung umfassend wenigstens zwei transparente Objektträger nach einem der Ansprüche 1 bis 5.

7. Diagnostisches Gerät, umfassend den Objektträger nach einem der Ansprüche 1 bis 5 oder die Halterung nach Anspruch 6.

8. Diagnostisches Gerät nach Anspruch 7, wobei es sich um ein Licht- oder Fluoreszenzmikroskop handelt.

9. Diagnostisches Verfahren, umfassend den Schritt mikroskopisches Untersuchen des Objektträgers nach einem der Ansprüche 1 bis 5.

10. Verfahren umfassend die Schritte
a) Bereitstellen eines transparenten Objektträgers, der zur lichtmikroskopischen oder fluoreszenzmikroskopischen Analyse einer biologischen oder chemischen Probe samt Kennzeichnung geeignet ist.
b) Einprägen einer Kennzeichnung, die im Inneren des Objektträgers lokalisiert ist,
c) Versehen des transparenten Objektträgers mit der biologischen oder
chemischen Probe,
wobei die Kennzeichnung und die Probe übereinander angeordnet sind und die Kennzeichnung bevorzugt eine Kennzeichnung zur Identitätssicherung ist.

11. Verfahren nach Anspruch 9, weiter umfassend
d) Zerteilen des transparenten Objektträgers nach Schritt c) unter Entstehung von wenigstens zwei Objektträger-Fragmenten, die jeweils Material aus der biologischen oder chemischen Probe umfassen.

12. Verfahren nach einem der Ansprüche 9 bis 11 weiter umfassend
e) Prozessieren der Probe auf wenigstens einem transparenten Objektträger.

13. Verfahren nach einem der Ansprüche 10 bis 12,
wobei jedes der Objektträger-Fragmente nach Schritt d) wenigstens eine Kennzeichnung enthält, die es erlaubt, das jeweilige Objektträger-Fragment dem transparenten Objektträger in Schritt a) zuzuordnen,
bevorzugt über einen Code als Teil der Kennzeichnung, der dem transparenten Objektträger in Schritt a) spezifisch zugeordnet werden kann.

14. Verfahren nach einem der Ansprüche 10 bis 12,
wobei die Kennzeichnungen sämtlicher Objektträger-Fragmente als Teil der Kennzeichnung einen identischen Code umfassen.
